# EUROPEAN PATENT APPLICATION

(11) **EP 4 647 763 A1**
(43) Date of publication of application: **12.11.2025**
(21) Application number: 25174870.3
(22) Date of filing: 07.05.2025
(51) Int. Cl.: G01N 29/27, G01N 29/22

(54) **INSPECTING INTERNAL POWERPLANT COMPONENT USING INSPECTION SCOPE**

(30) Priority: 07.05.2024 US 202418657164
(71) Applicant: RTX Corporation, Farmington, CT 06032 (US)
(72) Inventor: STUSSE, James, Middletown, 02842 (US); KING, Christopher R., Terryville, 06786 (US); MATTHEWS, John B., Amston, 06231 (US)
(74) Representative: Dehns

(57) **Abstract**

An inspection method is provided during which an actuator (40) and a sensor (42) are inserted into an interior (26) of a powerplant. The powerplant (24) includes a component (22) within the interior (26) of the powerplant (24). The actuator (40) and the sensor (42) are arranged with the component (22) within the interior (26) of the powerplant (24). First vibrations are induced in the component (22) at a first inspection location using the actuator (40). A first vibratory response in the component (22) excited by the first vibrations is measured using the sensor (42) to provide first sensor data. The component (22) is rotated a first number of degrees about a rotational axis of the component (22). Second vibrations are induced in the component (22) at a second inspection location using the actuator (40). A second vibratory response in the component (22) excited by the second vibrations is measured using the sensor (42) to provide second sensor data.

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present invention, an inspection method is provided during which an actuator and a sensor are inserted into an interior of a powerplant. The powerplant includes a component within the interior of the powerplant. The actuator and the sensor are arranged with the component within the interior of the powerplant. First vibrations are induced in the component at a first inspection location using the actuator. A first vibratory response in the component excited by the first vibrations is measured using the sensor to provide first sensor data. The component is rotated a first number of degrees about a rotational axis of the component. Second vibrations are induced in the component at a second inspection location using the actuator. A second vibratory response in the component excited by the second vibrations is measured using the sensor to provide second sensor data.

According to another aspect of the present invention, another inspection method is provided during which a head of an inspection scope is arranged within an interior of a powerplant. The head of the inspection scope includes an actuator. The powerplant includes a component within the interior of the powerplant. First vibrations are induced in the component at a first inspection location using the actuator. A first vibratory response in the component excited by the first vibrations is measured using a sensor to provide first sensor data. The head of the inspection scope is moved within the interior of a powerplant relative to the component. Second vibrations are induced in the component at a second inspection location using the actuator. A second vibratory response in the component excited by the second vibrations is measured using the sensor to provide second sensor data. A defect is detected in the component using at least one of the first sensor data or the second sensor data.

The moving of the head of the inspection scope may also include: moving the head of the inspection scope away from the component following the measuring of the first vibratory response; rotating the component a predetermined number of degrees about a rotational axis of the component; and moving the head of the inspection scope towards the component prior to the inducing of the second vibrations.

According to still another aspect of the present invention, another inspection method is provided during which first vibrations are induced in a component at a first inspection location using an actuator. A first vibratory response in the component excited by the first vibrations is measured using a sensor to provide first sensor data. A powerplant includes the component within an interior of the powerplant. A head of an inspection scope includes the actuator and the sensor. The head of the inspection scope is moved away from the component. The component is rotated a predetermined number of degrees about a rotational axis of the component. The head of the inspection scope is moved towards the component. Second vibrations are induced in the component at a second inspection location using the actuator. A second vibratory response in the component excited by the second vibrations is measured using the sensor to provide second sensor data. A defect in the component is detected using at least one of the first sensor data or the second sensor data.

The first number of degrees may be greater than zero degrees and equal to or less than sixty degrees.

The first number of degrees may be greater than sixty degrees and equal to or less than one hundred and twenty degrees.

The first number of degrees may be greater than one hundred and twenty degrees and equal to or less than one hundred and eighty degrees.

The inspection method may also include: rotating the component a second number of degrees about the rotational axis of the component; and inducing third vibrations in the component at a third inspection location using the actuator, and measuring a third vibratory response in the component excited by the third vibrations using the sensor.

The second number of degrees may be equal to the first number of degrees.

The inspection method may also include: determining a first characteristic of the component at least about the first inspection location based on the first sensor data; and determining a second characteristic of the component at least about the second inspection location based on the second sensor data.

The inspection method may also include determining a first characteristic of the component based on the first sensor data and the second sensor data.

The inspection method may also include detecting a defect internal to the component using at least one of the first sensor data or the second sensor data.

The first vibrations may be induced in the component while the actuator is in contact with the component at the first inspection location. The second vibrations may be induced in the component while the actuator is in contact with the component at the second inspection location. The inspection method may also include: moving the actuator to disengage from the component following the inducing of the first vibrations and prior to the rotating of the component; and moving the actuator to contact the component following the rotating of the component and prior to the inducing of the second vibrations.

The first vibratory response may be measured while the sensor is in contact with the component at the first inspection location. The second vibratory response may be measured while the sensor is in contact with the component at the second inspection location. The inspection method may also include: moving the sensor to disengage from the component following the measuring of the first vibratory response and prior to the rotating of the component; and moving the sensor to contact the component following the rotating of the component and prior to the measuring of the second vibratory response.

The inspection method may also include: inserting a head of an inspection scope into the interior of a powerplant, the head of the inspection scope comprising the actuator; and arranging the head of the inspection scope with the component within the interior of the powerplant.

The head of the inspection scope may also include the sensor.

The inspection method may also include fixing a position of the head of the inspection scope within the interior of the powerplant using a scope anchor.

The powerplant may be configured as or otherwise include a turbine engine.

The component may be configured as a rotor disk.

The powerplant may be installed with an aircraft during the inserting, the arranging, the inducing of the first vibrations, the measuring of the first vibratory response, the rotating, the inducing of the second vibrations, and the measuring of the second vibratory response.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIGS. 2A-C are schematic illustrations of a portion of the inspection system with the powerplant component, where an expandable mount of the inspection system is in various deployed arrangements.
FIG. 3 is a flow diagram of a method for inspecting a component of a powerplant.
FIGS. 4A-C are schematic illustrations of a portion of the inspection system with the powerplant component, where the expandable mount is in various stowed arrangements.
FIGS. 5A and 5B are graphs of various measured resonant signatures compared to a model resonant signature.
FIG. 6 is a schematic illustration of a portion of the inspection system with the powerplant component, where a scope head of the inspection system is retracted away from the powerplant component.
FIGS. 7A-C are schematic illustrations of the powerplant component with various arrangements of inspection locations.
FIG. 8 is a schematic illustration of the inspection system with the powerplant component, where the scope head is configured with a single actuator-sensor device.

### DETAILED DESCRIPTION

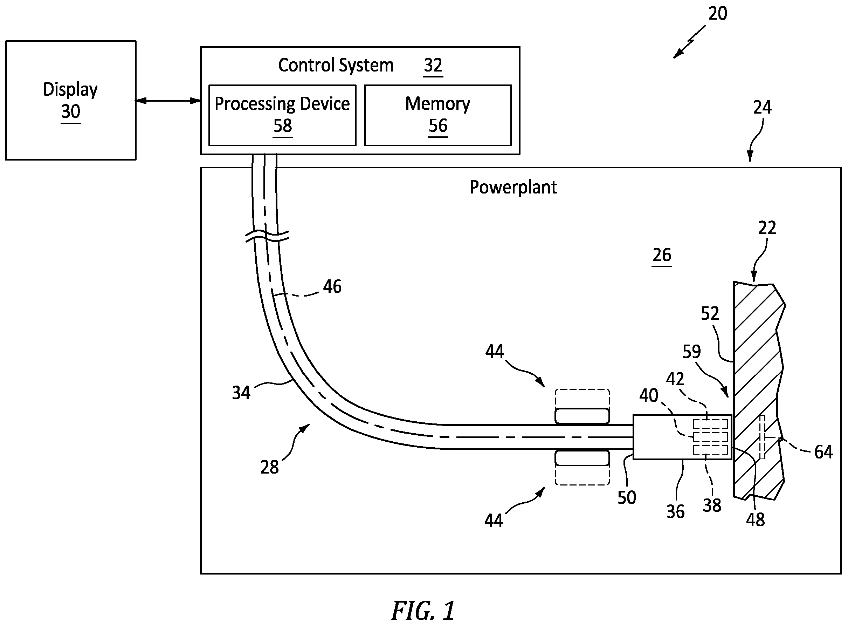

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an electronic inspection scope 28 (e.g., a borescope), a display 30 (e.g., a screen, a monitor, a touch screen, etc.) and a control system 32.

The inspection scope 28 of FIG. 1 includes a scope body 34 (e.g., a tether), a scope head 36, a scope sensor 38, a vibration actuator 40 and a vibration sensor 42. The inspection scope 28 of FIG. 1 also includes an anchor for the inspection scope 28 - a scope anchor - such as, but not limited to, a fluidic and/or mechanically expandable mount 44. The expandable mount 44 of FIG. 1 is schematically shown in a stowed arrangement by a solid line and in a deployed arrangement by the dashed line.

The scope body 34 extends longitudinally along a longitudinal centerline 46 of the inspection scope 28 and its members 34 and 36 from a base end of the inspection scope 28 to the scope head 36. The scope body 34 is a flexible body. The scope body 34 may include one or more internal actuators for manipulating a configuration of the inspection scope 28 and its scope body 34 to aid in maneuvering the scope head 36 within the interior 26 of the aircraft powerplant 24 to the powerplant component 22.

The scope head 36 is disposed at a longitudinal distal end 48 of the inspection scope 28. The scope head 36 of FIG. 1, for example, extends longitudinally along the centerline 46 from a longitudinal proximal end 50 of the scope head 36 to the scope distal end 48 of the inspection scope 28; here, also a longitudinal distal end of the scope head 36. The scope sensor 38, the vibration actuator 40 and the vibration sensor 42 are each arranged with (e.g., mounted to and/or disposed in) the scope head 36. The scope sensor 38, the vibration actuator 40 and/or the vibration sensor 42 may also each be disposed at (e.g., on, adjacent or proximate) the scope distal end 48.

The scope sensor 38 is configured to aid in the maneuvering of the scope head 36 and, more particularly, the vibration actuator 40 and/or the vibration sensor 42 within the interior 26 of the aircraft powerplant 24 towards the powerplant component 22. The scope sensor 38, for example, may be configured as a camera (e.g., a still image camera and/or a video camera), a proximity sensor, or the like which (e.g., in real time) locates the scope head 36 and/or the scope members 40 and/or 42 during the maneuvering of the scope head 36, within the interior 26 of the aircraft powerplant 24, towards the powerplant component 22.

The vibration actuator 40 is configured to induce vibrations in the powerplant component 22 based on a control signal received from the control system 32. The vibration sensor 42 is configured to measure a vibratory response in the powerplant component 22 excited by the vibrations induced by the vibration actuator 40. The vibration sensor 42 is further configured to provide sensor data (e.g., an output signal or signals) to the control system 32 indicative of the measured vibratory response.

The vibration actuator 40 and/or the vibration sensor 42 may each be configured as or otherwise include a piezoelectric device. Examples of the piezoelectric device include, but are not limited to, a piezoelectric stack and a single crystal piezoelectric device. The piezoelectric stack may include a longitudinal stack (or multiple layers) of piezoelectric actuators. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 40 may be configured as another type of electromechanical device operable to induce vibrations, and/or the vibration sensor 42 may be configured as another type of electromechanical device operable to measure the vibratory response.

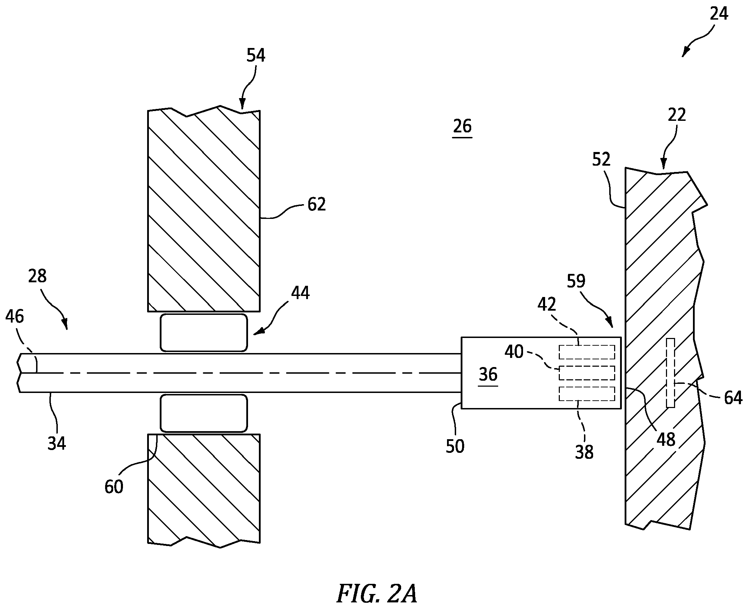

The expandable mount 44 may be disposed with and/or connected to the scope head 36. The expandable mount 44 may alternatively (or also) be disposed with and/or connected to the scope body 34, for example at the head proximal end 50 or otherwise near the scope head 36 and its head proximal end 50. Referring to FIGS. 2A-C, the expandable mount 44 is configured to anchor the inspection scope 28 within the aircraft powerplant 24 to fix a position of the scope head 36 within the interior 26 of the aircraft powerplant 24 relative to the powerplant component 22. Moreover, the expandable mount 44 is configured to maintain engagement (e.g., contact and/or a preload) between the scope head member(s) 40 and/or 42 and an exterior surface 52 of the powerplant component 22, for example once the scope head 36 is in its fixed position next to the powerplant component 22 within the interior 26 of the aircraft powerplant 24. The expandable mount 44 of FIGS. 2A-C, for example, is configured to expand in size (e.g., lateral width, diameter, circumference, etc.) in order to engage another component 54 within the interior 26 of the aircraft powerplant 24 that is next to or near the powerplant component 22 to be inspected. This engagement may temporarily fixedly couple the inspection scope 28 and its members 34 and 36 to the second powerplant component 54 as described below in further detail.

Referring to FIG. 1, the control system 32 is configured in signal communication (e.g., hardwired and/or wirelessly coupled) with the inspection scope 28 and its scope members 38, 40 and 42 as well as the display 30. The control system 32 of FIG. 1 may be in signal communication with the scope members 38, 40 and 42 through one or more (e.g., electrically conductive and/or optical) signal paths extending within the scope body 34. The control system 32 may be implemented with a combination of hardware and software. The hardware may include memory 56 and at least one processing device 58, which processing device 58 may include one or more single-core and/or multi-core processors. The hardware may also or alternatively include analog and/or digital circuitry other than that described above.

The memory 56 is configured to store software (e.g., program instructions) for execution by the processing device 58, which software execution may control and/or facilitate performance of one or more operations such as those described below. The memory 56 may be a non-transitory computer readable medium. For example, the memory 56 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

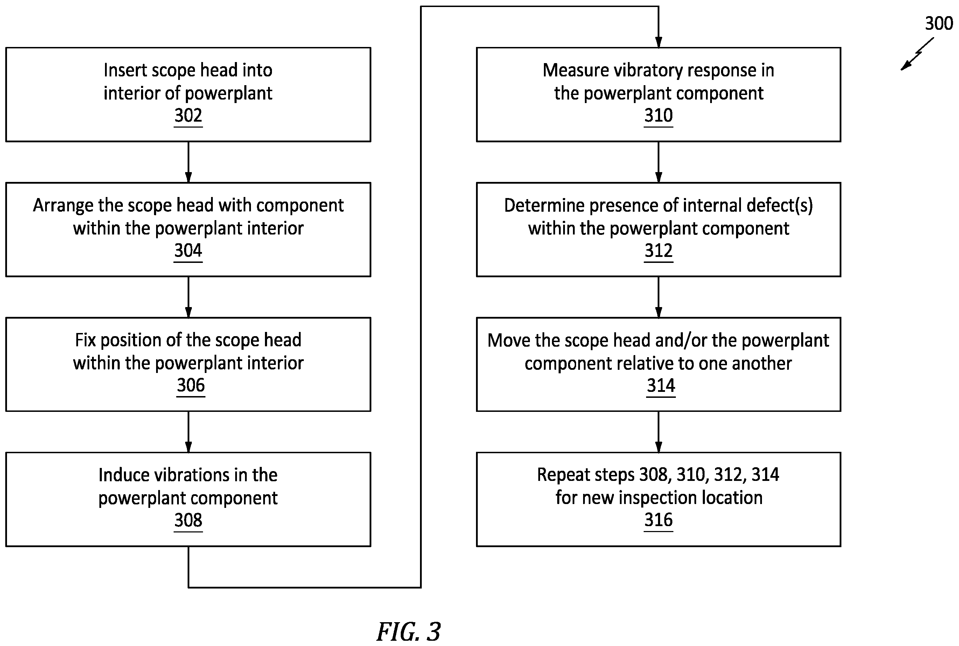

FIG. 3 is a flow diagram of a method 300 for inspecting the powerplant component 22 - a specimen component to be inspected. For ease of description, the inspection method 300 is described below with reference to the inspection system 20 of FIG. 1. The powerplant component 22 is also described below as being installed with the aircraft powerplant 24 and disposed within the interior 26 of the aircraft powerplant 24, where the aircraft powerplant 24 remains installed onboard the aircraft. The inspection method 300 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 302, the scope head 36 is inserted into the interior 26 of the aircraft powerplant 24. An access cover, a powerplant component and/or the like, for example, may be removed from the aircraft powerplant 24 or opened to provide an access port into the interior 26 of the aircraft powerplant 24. The scope head 36 may then be passed through the access port into the interior 26 of the aircraft powerplant 24.

In step 304, the scope head 36 is arranged with the powerplant component 22 within the interior 26 of the aircraft powerplant 24. The inspection scope 28 and its scope head 36, for example, may be maneuvered to locate the scope head 36 next to the powerplant component 22. This maneuvering may include passing the scope head 36 through one or more passages, ducts, conduits, plenums, ports, etc. within the aircraft powerplant 24 until, for example, the scope head 36 is arranged next to a respective inspection location 59 on the powerplant component 22. The inspection scope 28 and its scope head 36 may then be further maneuvered to push one or more of the inspection scope members 36, 40 and/or 42 up against the powerplant component 22 and its component surface 52 at the respective inspection location 59. The scope head member(s) 40 and/or 42, for example, may be abutted against the powerplant component 22, where each respective scope head member 40, 42 contacts the powerplant component 22 and its component surface 52 at the respective inspection location 59.

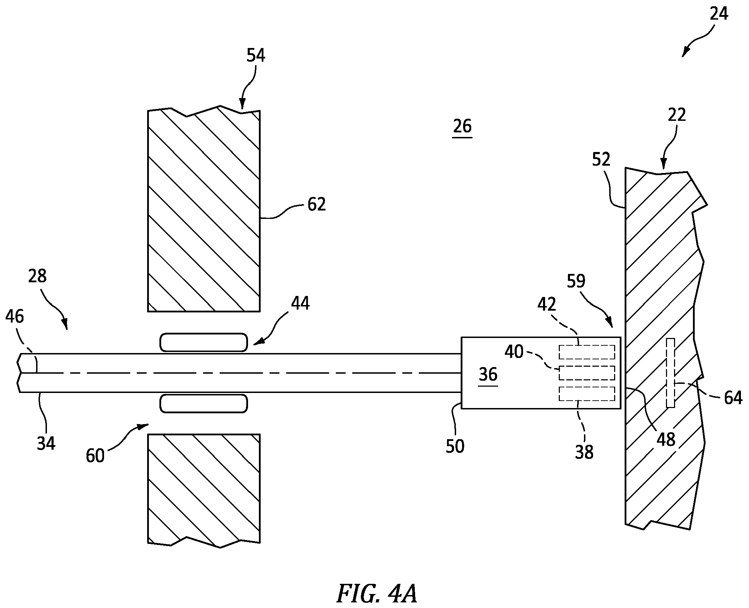

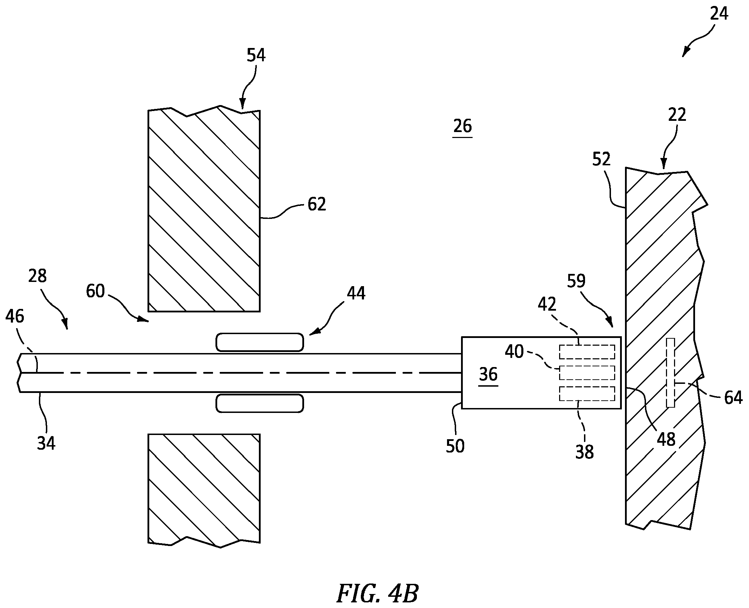

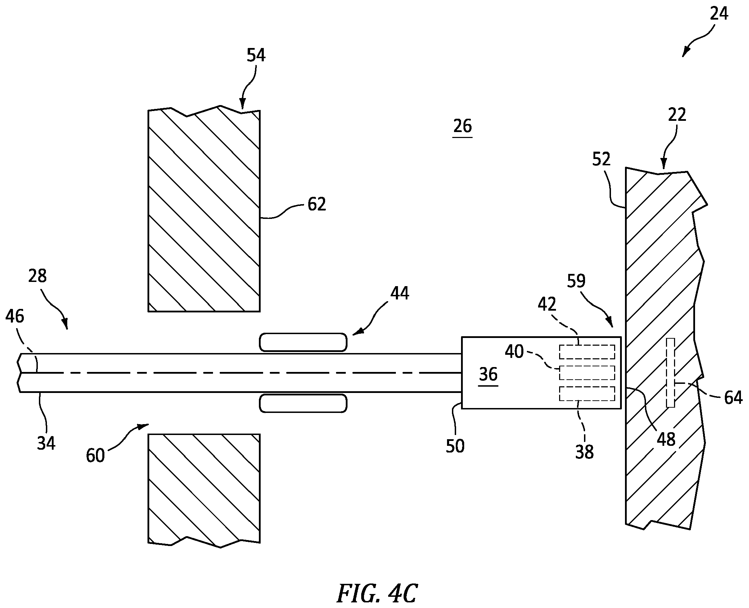

In step 306, the position of the scope head 36 and its scope head member(s) 40 and/or 42 may be fixed within the interior 26 of the aircraft powerplant 24 and relative to the powerplant component 22 using the expandable mount 44. For example, referring to FIG. 4A, the expandable mount 44 may be located within an aperture 60 in the second powerplant component 54 when the scope head member(s) 40 and/or 42 are abutted against the powerplant component 22 and its component surface 52. The expandable mount 44 may be expanded from the stowed arrangement (e.g., a retracted / contracted arrangement) of FIG. 4A to the deployed arrangement (e.g., an expanded arrangement) of FIG. 2A. In the deployed arrangement of FIG. 2A, the size of the expandable mount 44 is increased such that a radial outer periphery of the expandable mount 44 radially engages (e.g., contacts) a portion of the second powerplant component 54 forming the aperture 60. This engagement may center the inspection scope 28 and its inspection scope members 34 and 36 relative to the aperture 60. The engagement may also fix the position of the inspection scope 28 and its inspection scope members 34 and 36 relative to the aperture 60 through an interference fit. In another example, referring to FIG. 4B, the expandable mount 44 may be located partially within the aperture 60 and partially in a space between the powerplant components 22 and 54 when the scope head member(s) 40 and/or 42 are abutted against the powerplant component 22 and its component surface 52. With this arrangement, following the deployment (e.g., expansion) of the expandable mount 44, an interference fit is formed at the radial engagement between the expandable mount 44 and the second powerplant component 54. In addition, the expandable mount 44 may also axially abut against a side 62 of the second powerplant component 54 facing the powerplant component 22 and its component surface 52. The expandable mount 44 may thereby longitudinally lock a position of the inspection scope 28 and its members 36, 40 and 42 along the centerline 46. In still another example, referring to FIG. 4C, the expandable mount 44 may be located with the space between the powerplant components 22 and 54 when the scope head member(s) 40 and/or 42 are abutted against the powerplant component 22 and its component surface 52. With this arrangement, following the deployment (e.g., expansion) of the expandable mount 44, the expandable mount 44 may longitudinally lock the position of the inspection scope 28 and its members 36, 40 and 42 along the centerline 46.

In addition to the foregoing, the inspection head member(s) 40 and/or 42 may be preloaded against the powerplant component 22 and its component surface 52. The preload may be equal to or greater than one or two pounds (1-2 lbs); e.g., between one and one-half pounds (1.5 lbs) and four and one-half pounds (4.5 lbs). The present disclosure, however, is not limited to such an exemplary preloads and may change based on vibration actuator 40 and/or vibration sensor specifications.

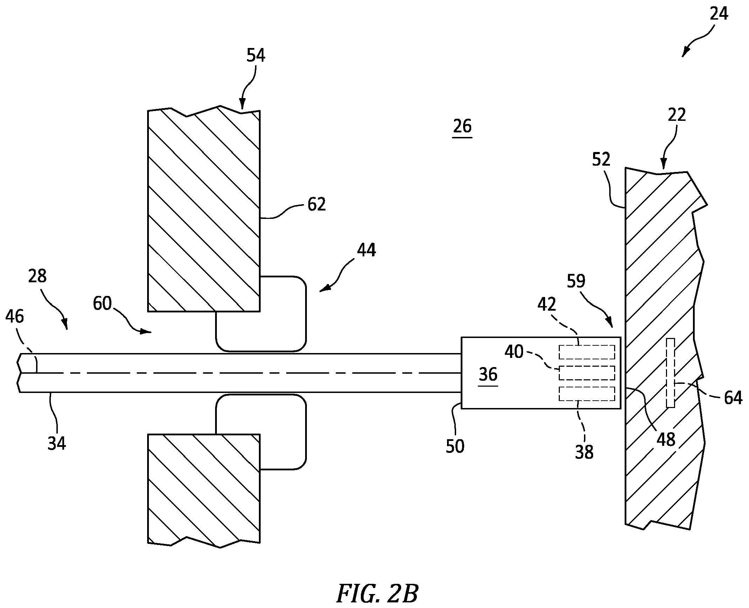

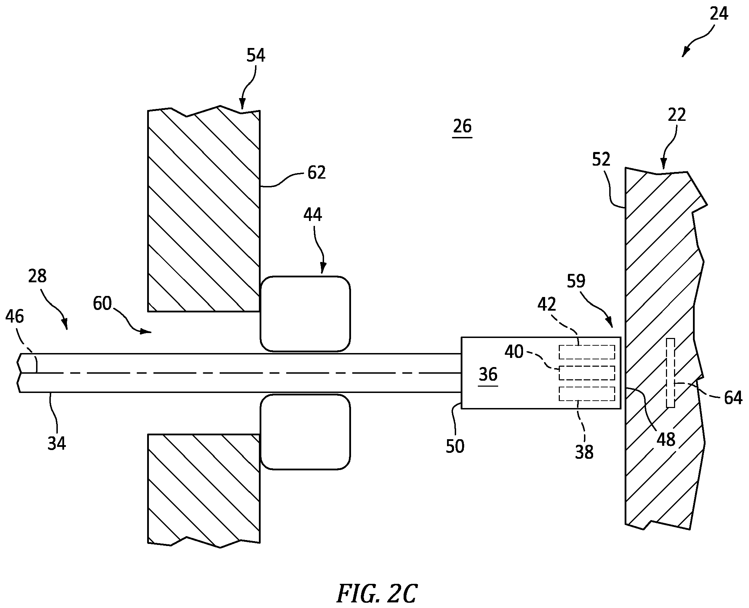

The preloading may occur during the abutting of the scope head member(s) 40 and/or 42 against the component surface 52. For example, in addition to placing the scope head member(s) 40 and/or 42 in contact with the component surface 52, the inspection scope 28 may be maneuvered to also exert some or all of the preload between the scope head member(s) 40 and/or 42 and the component surface 52. In another example, in addition to fixing the position of the scope head 36 and its scope head member(s) 40 and/or 42, the deployment of the expandable mount 44 may also push the inspection head member(s) 40 and/or 42 longitudinally towards the powerplant component 22 (e.g., see FIGS. 2B and 2C) to also exert some or all of the preload between the scope head member(s) 40 and/or 42 and the component surface 52. In still another example, following the deployment of the expandable mount 44, it is contemplated the scope body 34 or the scope head 36 may include another device (e.g., a longitudinal expansion joint) configured to further push the inspection head member(s) 40 and/or 42 towards the powerplant component 22 to exert some or all of the preload between the scope head member(s) 40 and/or 42 and the component surface 52.

In step 308, vibrations are induced in the powerplant component 22 using the vibration actuator 40 at the respective inspection location 59. The control system 32, for example, may signal the vibration actuator 40 to vibrate (e.g., via a control signal or provision of an electrical current), and the vibration of the vibration actuator 40 may be transmitted into the powerplant component 22 through the preloaded contact between the vibration actuator 40 and the component surface 52. The vibrations may be induced to sweep across a range of frequencies during the step 308; e.g., a five kilohertz (5 kHz) range, a ten kilohertz (10 kHz) range, a twenty kilohertz (20 kHz) range, or any other suitable range which will facilitate mapping of a response signature as described below.

In step 310, a vibratory response is measured in the powerplant component 22 using the vibration sensor 42 at the respective inspection location 59. This vibratory response is induced by the vibrations transmitted into the powerplant component 22 by the vibration actuator 40. The vibration sensor 42 then generates the sensor data indicative of the measured vibratory response, and provides the sensor data to the control system 32.

In step 312, the sensor data is processed to determine whether or not the powerplant component 22 includes any internal defects 64 at and/or around the respective inspection location 59. Herein, the term "defect" may describe a physical anomaly present within a component which may negatively affect a useful life of that component and/or performance of that component. Examples of the internal defect(s) 64 include, but are not limited to, cracks, voids, corrosion, density variations, areas of poor solidification (e.g., sintering) and/or the like.

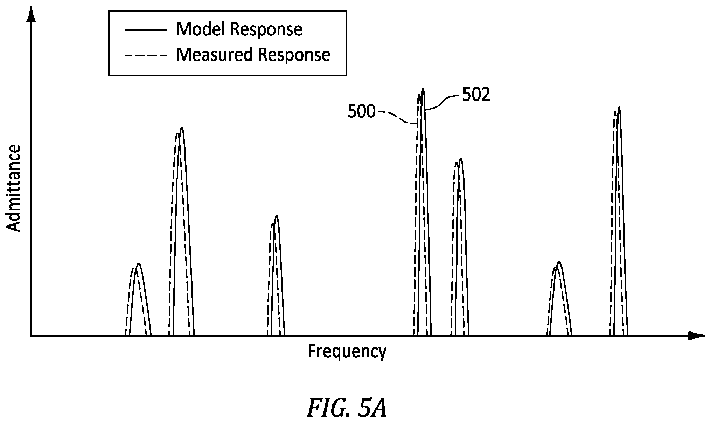

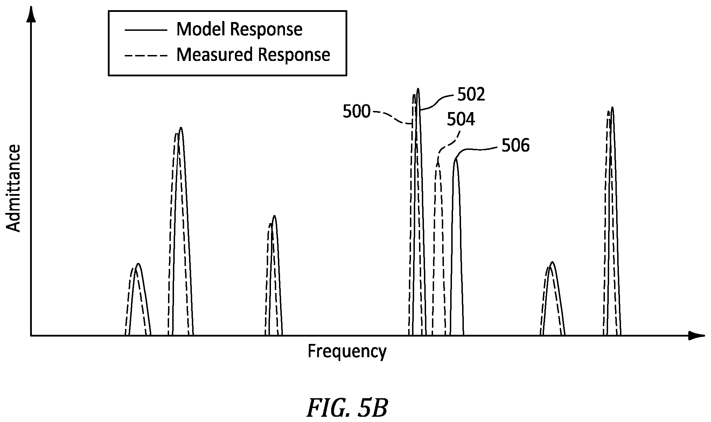

The control system 32, for example, may analyze the measured vibratory response to determine resonant frequencies and/or other structural mode parameters for the powerplant component 22. Referring to FIG. 5A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the control system 32 may determine the powerplant component 22 does not include, or there is a low probability that the powerplant component 22 includes, any internal defects. For example, a measured resonance signature 500 of the measured resonant frequencies in FIG. 5A is the same as, or is within tolerance of, a model resonance signature 502 of expected resonant frequencies for the model component without any internal defects. Note, the matching model and measured responses are shown in FIGS. 5A and 5B slightly laterally offset for clarity of illustration. By contrast referring to FIG. 5B, where one or more of the resonant frequencies and/or other structural mode parameters do not match (or are outside tolerance of) the corresponding expected resonant frequencies and/or other structural mode parameters for the model component without any internal defects, the control system 32 may determine the powerplant component 22 does include, or there is a high probability that the powerplant component 22 includes, one or more internal defects 64. For example, the resonance signature 500 of the measured resonant frequencies in FIG. 5B includes an outlier resonant frequency 504 which is different than (e.g., does not align with) and is outside of tolerance of a corresponding resonant frequency 506 for the resonance signature 502 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 300 and the inspection system 20 may non-destructively identify presence of internal defect(s) 64 within the powerplant component 22 while that powerplant component 22 remains installed with the aircraft powerplant 24 and/or the aircraft powerplant 24 remains installed onboard the aircraft.

When the step 312 identifies presence of no internal defects in material of the powerplant component 22, information indicative of such may be presented on the display 30. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 312 identifies the presence of internal defect(s) 64, information indicative of such may be presented on the display 30. This information may simply identify the presence of internal defects 64. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 300 is described above identifying whether or not the inspected powerplant component 22 includes any internal defects 64, this inspection method 300 may also (or alternatively) be extended to determine one or more other physical characteristics about the inspected powerplant component 22.

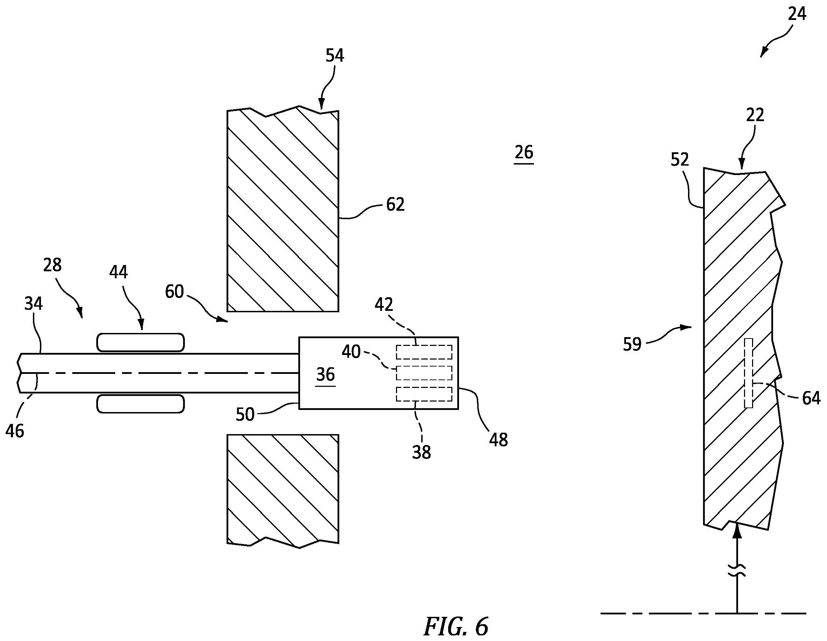

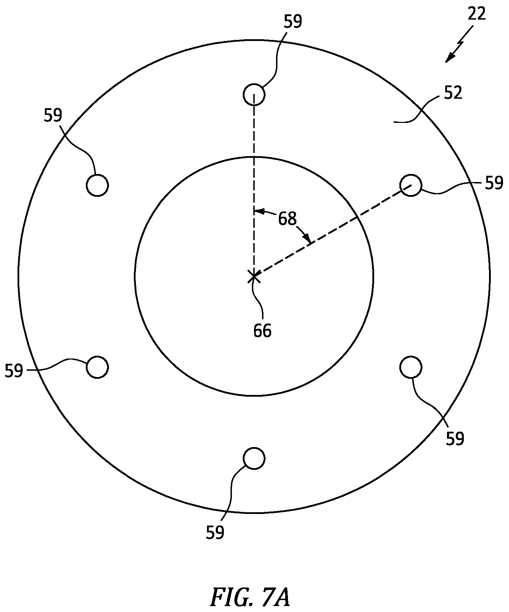

In step 314, after performing the step 310 or the step 312, the powerplant component 22 and/or the scope head 36 are moved relative to one another to facilitate further inspection of the powerplant component 22. The expandable mount 44, for example, may be rearranged from its deployed arrangement (e.g., see FIGS. 2A-C) into its stowed arrangement (e.g., see FIGS. 4A-C). Referring to FIG. 6, the expandable mount 44 may thereby decouple the inspection scope 28 from the second powerplant component 54. The inspection scope 28 may then be maneuvered to disengage its scope head members 40 and/or 42 from the component surface 52 and move the scope head 36 and its scope head members 40 and/or 42 away from the powerplant component 22 and its component surface 52. The scope head 36 and its scope head members 40 and/or 42, for example, may be retracted far enough away from the powerplant component 22 to facilitate unobstructed rotation of the powerplant component 22 about a rotational axis 66 of the powerplant component 22. Referring to FIGS. 7A-C, the powerplant component 22 may then be rotated a precise and predetermined number of degrees 68 about its rotational axis 66 such that the scope head 36 is circumferentially aligned with another, circumferentially neighboring inspection location 59 about the rotational axis 66. Once the powerplant component 22 is stationary, the inspection scope 28 may be maneuvered to move the scope head 36 and its scope head members 40 and/or 42 towards the powerplant component 22 and reengage its scope head members 40 and/or 42 with the component surface 52 (see FIGS. 4A-C). The expandable mount 44 may then be rearranged from its stowed arrangement (e.g., see FIGS. 4A-C) into its deployed arrangement (e.g., see FIGS. 2A-C). The expandable mount 44 may thereby recouple the inspection scope 28 to the second powerplant component 54.

In step 316, the steps 308, 310, 312 and 314 are repeated for the new inspection location 59 along the powerplant component 22. Steps 314 and 316 may (or may not) then be repeated one or more additional times to facilitate additional inspections at one or more additional new inspection locations 59 along the powerplant component 22. In this manner, the inspection method 300 may provide a more accurate inspection of the powerplant component 22 and/or a higher resolution mapping of a vibrational response of the powerplant component 22. In addition, the inspection method 300 may reduce or eliminate signal noise and/or interference associated with (a) vibrational dissipation as the induce vibrations propagate within the powerplant component 22 away from the respective inspection location 59, (b) debris accumulated on the powerplant component 22 during aircraft powerplant operation, and the like.

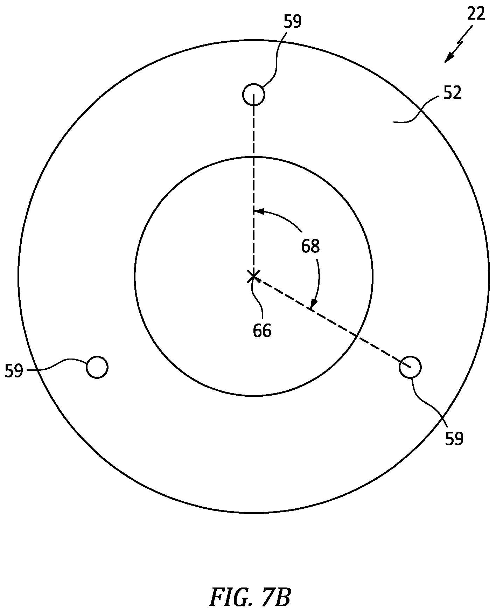

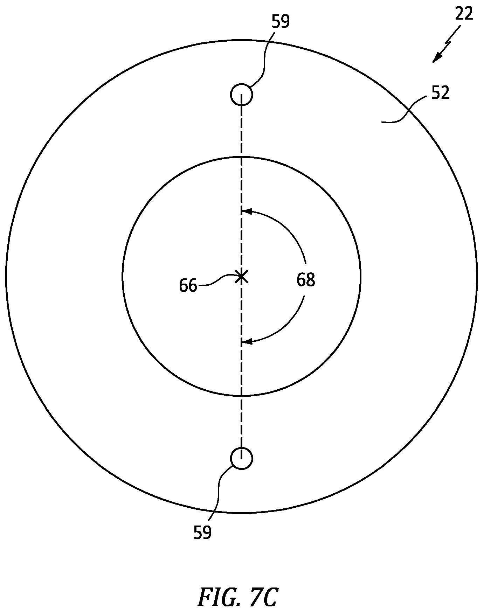

Referring to FIGS. 7A-C, the inspection locations 59 are arranged circumferentially about the rotational axis 66 in an annular array. Within this array of the inspection locations 59, the inspection locations 59 may be equispaced circumferentially about the rotational axis 66 as well as located at a common (the same) radius from the rotational axis 66. The number of degrees 68 therefore may be determined based on the number of the inspection locations 59, or vice versa. Referring to FIG. 7A, the number of degrees 68 between each circumferentially neighboring pair of the inspection locations 59 may be greater than zero degrees (0°) and equal to or less than sixty degrees (60°); e.g., the number of degrees 68 may be twenty degrees (20°), thirty degrees (30°), forty-five degrees (45°) or sixty degrees (60°). Referring to FIG. 7B, the number of degrees 68 between each circumferentially neighboring pair of the inspection locations 59 may alternatively be greater than sixty degrees (60°) and equal to or less than one hundred and twenty degrees (120°); e.g., the number of degrees 68 may be ninety degrees (90°) or one hundred and twenty degrees (120°). Referring to FIG. 7C, the number of degrees 68 between each circumferentially neighboring pair of the inspection locations 59 may alternatively be greater than one hundred and twenty degrees (120°) and equal to or less than one hundred and eighty degrees (180°); e.g., the number of degrees 68 may be one hundred and eighty degrees (180°). The present disclosure, however, is not limited to the foregoing exemplary number of degrees of powerplant component rotation. Moreover, it is contemplated the inspection locations 59 may not be equispaced circumferentially about the rotational axis 66 where, for example, there is a particular sector of interest for inspection.

In some embodiments, the vibrations induced in the powerplant component 22 during the step 308 may have a frequency equal to or greater than thirty kilohertz (30 kHz); e.g., equal to or greater than forty kilohertz (40 kHz) or fifty kilohertz (50 kHz) up to about two hundred and fifty kilohertz (250kHz). This frequency may be a lower bound, an upper bound or an intermediate frequency within the range of frequencies swept during the vibration inducement step 308. By vibrating the powerplant component 22 at such a relatively high frequency, the inspection method 300 and/or the inspection system 20 may detect one or more internal defects 64 with a dimension (e.g., a width, a length, etc.) equal to or less than one hundred mils (0.10 inches; 2.54 mm) or one hundred and fifty mils (0.15 inches; 3.81 mm). More particularly, the inspection method 300 and/or the inspection system 20 may detect one or more internal defects 64 with a relatively small dimension equal to or less than fifty mils (0.05 inches; 1.27 mm); e.g., equal to or less than forty mils (0.04 inches; 1.02 mm). Here, the powerplant component 22 is constructed from a metal. It is contemplated, however, the vibrations may alternatively be induced at a frequency below thirty kilohertz (30 kHz) when detecting larger internal defect(s) 64 within the powerplant component 22 and/or when inspecting a powerplant component with another material construction.

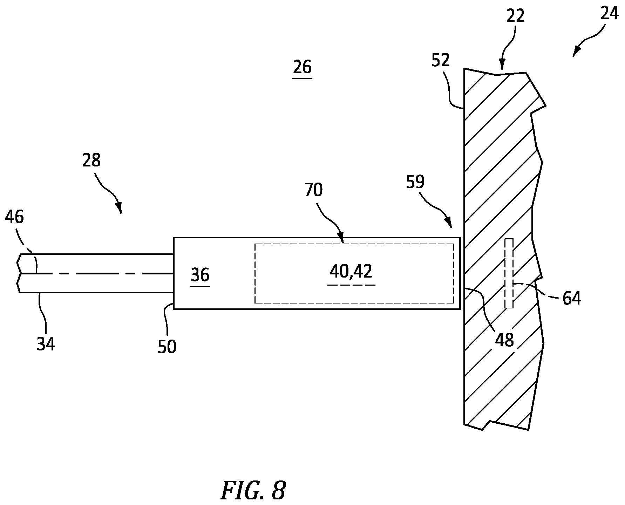

In some embodiments, referring to FIGS. 1, 2A-C and 4A-C, the vibration actuator 40 and the vibration sensor 42 may be configured as discrete elements. In other embodiments, referring to FIG. 8, the vibration actuator 40 and the vibration sensor 42 are configured as a single device 70; e.g., a single piezoelectric device operable to both induce vibrations as well as measure a vibratory response.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting an actuator (40) and a sensor (42) into an interior (26) of a powerplant (24), the powerplant (24) comprising a component (22) within the interior (26) of the powerplant (24);
arranging the actuator (40) and the sensor (42) with the component (22) within the interior (26) of the powerplant (24);
inducing first vibrations in the component (22) at a first inspection location using the actuator (40), and measuring a first vibratory response in the component (22) excited by the first vibrations using the sensor (42) to provide first sensor data;
rotating the component (22) a first number of degrees about a rotational axis of the component (22); and
inducing second vibrations in the component (22) at a second inspection location using the actuator (40), and measuring a second vibratory response in the component (22) excited by the second vibrations using the sensor (42) to provide second sensor data.

2. The inspection method of claim 1, wherein the first number of degrees is greater than zero degrees and equal to or less than sixty degrees.

3. The inspection method of claim 1, wherein the first number of degrees is greater than sixty degrees and equal to or less than one hundred and twenty degrees.

4. The inspection method of claim 1, wherein the first number of degrees is greater than one hundred and twenty degrees and equal to or less than one hundred and eighty degrees.

5. The inspection method of any preceding claim, further comprising:
rotating the component (22) a second number of degrees about the rotational axis of the component (22); and
inducing third vibrations in the component (22) at a third inspection location using the actuator (40), and measuring a third vibratory response in the component (22) excited by the third vibrations using the sensor (42),
wherein, optionally, the second number of degrees is equal to the first number of degrees.

6. The inspection method of any preceding claim, further comprising:
determining a first characteristic of the component (22) at least about the first inspection location based on the first sensor data; and
determining a second characteristic of the component (22) at least about the second inspection location based on the second sensor data.

7. The inspection method of any preceding claim, further comprising determining a/the first characteristic of the component (22) based on the first sensor data and the second sensor data.

8. The inspection method of any preceding claim, further comprising detecting a defect (64) internal to the component (22) using at least one of the first sensor data or the second sensor data.

9. The inspection method of any preceding claim, wherein the first vibrations are induced in the component (22) while the actuator (40) is in contact with the component (22) at the first inspection location, the second vibrations are induced in the component (22) while the actuator (40) is in contact with the component (22) at the second inspection location, and the inspection method further comprises:
moving the actuator (40) to disengage from the component (22) following the inducing of the first vibrations and prior to the rotating of the component (22); and
moving the actuator (40) to contact the component (22) following the rotating of the component (22) and prior to the inducing of the second vibrations.

10. The inspection method of any preceding claim, wherein the first vibratory response is measured while the sensor (42) is in contact with the component (22) at the first inspection location, the second vibratory response is measured while the sensor (42) is in contact with the component (22) at the second inspection location, and the inspection method further comprises:
moving the sensor (40) to disengage from the component (22) following the measuring of the first vibratory response and prior to the rotating of the component (22); and
moving the sensor (40) to contact the component (22) following the rotating of the component (22) and prior to the measuring of the second vibratory response.

11. The inspection method of any preceding claim, further comprising:
inserting a head (36) of an inspection scope (28) into the interior (26) of the powerplant (24), the head (36) of the inspection scope (28) comprising the actuator (40); and
arranging the head (36) of the inspection scope (28) with the component (22) within the interior (26) of the powerplant (24).

12. The inspection method of claim 11, wherein the head (36) of the inspection scope (28) further comprises the sensor (42).

13. The inspection method of claim 11 or 12, further comprising fixing a position of the head (36) of the inspection scope (28) within the interior (26) of the powerplant (24) using a scope anchor (44).

14. The inspection method of any preceding claim, wherein the powerplant (24) comprises a turbine engine, and/or wherein the component (22) is configured as a rotor disk.

15. The inspection method of any preceding claim, wherein the powerplant (24) is installed with an aircraft during the inserting, the arranging, the inducing of the first vibrations, the measuring of the first vibratory response, the rotating, the inducing of the second vibrations, and the measuring of the second vibratory response.
